# EUROPEAN PATENT APPLICATION

(11) **EP 4 633 237 A1**
(43) Date of publication of application: **15.10.2025**
(21) Application number: 22967477.5
(22) Date of filing: 05.12.2022
(51) Int. Cl.: H04W 36/08

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/136602
(87) International publication number: WO 2024/119313

(57) **Abstract**

Embodiments of the present disclosure relate to the technical field of mobile communications, and provided thereby are a communication method, an electronic device, and a storage medium. The communication method is applied to a station device. The method comprises: determining a first wireless frame, the first wireless frame comprising first identification information, the first identification information instructing the station device to switch from a first access point device to a second access point device, and a service transmitted by the station device being a low-latency service (101); and sending the first wireless frame to instruct the second access point device to reserve a resource for the low-latency service (102). The embodiments of the present disclosure provide a mechanism for supporting access point device switching when transmitting low-latency services.

## Description

### TECHNICAL FIELD

The embodiments of the disclosure relate to a field of mobile communication technology, in particular to a communication method, an electronic device and a storage medium.

### BACKGROUND

With the rapid development of mobile communication technology, wireless fidelity (Wi-Fi) technology has made great progress in transmission rate and throughput. The next generation Wi-Fi technology, ultra high reliability (UHR), is currently being studied, to improve reliability of wireless local area network (WLAN) connectivity, reduce latencies, increase manageability, increase throughput including at different signal to noise ratio (SNR) levels and reduce device level power consumption. In UHR, in order to improve system throughput, a method of simultaneous communication in sub7GHz+45/60GHZ is proposed.

In UHR, a low latency service transmission mechanism will be further enhanced. When a station (STA) is transmitting a low latency service, it may need to switch access points (or multi-link access points), and thus a mechanism for switching access points is needed to support transmission of low latency services.

### SUMMARY

The embodiments of the disclosure provide a communication method, an electronic device and a storage medium, to provide a mechanism for switching access points to support transmission of low latency services.

According to a first aspect of embodiments of the disclosure, a communication method is provided. The method is applied to an STA (station), and includes:
determining a first radio frame, in which the first radio frame includes first identification information, the first identification information is configured to indicate that the STA switches from a first access point to a second access point, and a service transmitted by the STA is a low latency service; and
sending the first radio frame to instruct the second access point to reserve resources for the low latency service.

According to a second aspect of embodiments of the disclosure, a communication method is provided. The method is applied to a second access point, and includes:
receiving a first radio frame;
the first radio frame includes first identification information, the first identification information is configured to indicate that an STA switches from a first access point to the second access point, a service transmitted by the STA is a low latency service, and the first identification information is configured to instruct the second access point to reserve resources for the low latency service.

According to a third aspect of embodiments of the disclosure, an electronic device is provided. The electronic device is an STA, and includes:
a determining module, configured to determine a first radio frame, in which the first radio frame includes first identification information, the first identification information is configured to indicate that the STA switches from a first access point to a second access point, and a service transmitted by the STA is a low latency service; and
a sending module, configured to send the first radio frame to instruct the second access point to reserve resources for the low latency service.

According to a fourth aspect of embodiments of the disclosure, an electronic device is provided. The electronic device is a second access point, and includes:
a receiving module, configured to receive a first radio frame;
the first radio frame includes first identification information, the first identification information is configured to indicate that an STA switches from a first access point to the second access point, a service transmitted by the STA is a low latency service, and the first identification information is configured to instruct the second access point to reserve resources for the low latency service.

According to a fifth aspect of embodiments of the disclosure, an electronic device is provided. The electronic device includes: a memory, a processor, and a computer program stored in the memory and executable by the processor. When the processor executes the program, one or more methods in the embodiments of the disclosure are implemented.

According to a sixth aspect of embodiments of the disclosure, a computer readable storage medium is provided. The computer readable storage medium stores a computer program, and when the computer program is executed by a processor, one or more methods in the embodiments of the disclosure are implemented.

In the embodiment of the disclosure, the STA determines a first radio frame, which includes first identification information. The first identification information is configured to indicate that the STA switches from a first access point to a second access point, and a service transmitted by the STA is a low latency service. The STA sends the first radio frame to the second access point to cause the second access point to reserve resources for the low latency service transmitted by the STA after receiving the first radio frame, which ensures that the low latency service can continue to be transmitted in a timely manner after the STA switches to the second access point, thereby meeting latency requirements of the low latency service. The embodiment of the disclosure provides a mechanism for switching access points to support transmission of low latency services.

Additional aspects and advantages of the embodiments of the disclosure will be given in part in the following descriptions, become apparent in part from the following descriptions, or be learned from the practice of the disclosure.

### BRIEF DESCRIPTION OF THE DRAWINGS

In order to clearly illustrate technical solutions of the embodiments of the disclosure, a brief description of drawings used in the embodiments of the disclosure is given below. Obviously, the drawings in the following description are only part of the embodiments of the disclosure, and for those skilled in the art, other drawings can be obtained according to these drawings without inventive works.
FIG. 1 is a flowchart of a communication method provided by an embodiment of the disclosure.
FIG. 2 is a first schematic diagram of a first example of an embodiment of the disclosure.
FIG. 3 is a second schematic diagram of the first example of an embodiment of the disclosure.
FIG. 4 is a flowchart of another communication method provided by an embodiment of the disclosure.
FIG. 5 is a schematic diagram of an electronic device provided by an embodiment of the disclosure.
FIG. 6 is a schematic diagram of another electronic device provided by an embodiment of the disclosure.
FIG. 7 is a schematic diagram of yet another electronic device provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of apparatuses and methods consistent with aspects related to the disclosure as recited in the attached claims.

The terms used in the embodiments of the disclosure are only for the purpose of describing specific embodiments, and are not intended to limit the disclosure. The singular for ms of "a" and "the" used in the disclosure and the attached claims are also intended to include plural forms, unless the context clearly indicates other meanings. It should also be understood that the term "and/or" as used herein refers to and includes any or all possible combinations of one or more associated listed items. For example, "A and/or B" indicates that A exists alone, A and B both exist, and B exists alone. The character "/" generally indicates that associated objects before and after the character "/" is in an "or" relation. The term "multiple" refers to two or more, and it may be understood as "at least two" in the embodiment of the disclosure.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

The technical solutions in the embodiments of the disclosure will be described clearly and completely below in combination with the accompanying drawings in the embodiments of the disclosure. Clearly, the described embodiments are only a part of the embodiments of the disclosure, and not all of the embodiments. Based on the embodiments of the disclosure, other embodiments obtained by those skilled in the art without inventive works all fall within the scope of protection of the disclosure.

The embodiments of the disclosure provide a communication method, an electronic device and a storage medium, to provide a mechanism for switching access points to support transmission of low latency services.

The method and device are based on the same application concept, and since the method and device solve problems based on similar principles, the implementations of the device and the method can be referred to each other, and repeated contents will not elaborated again.

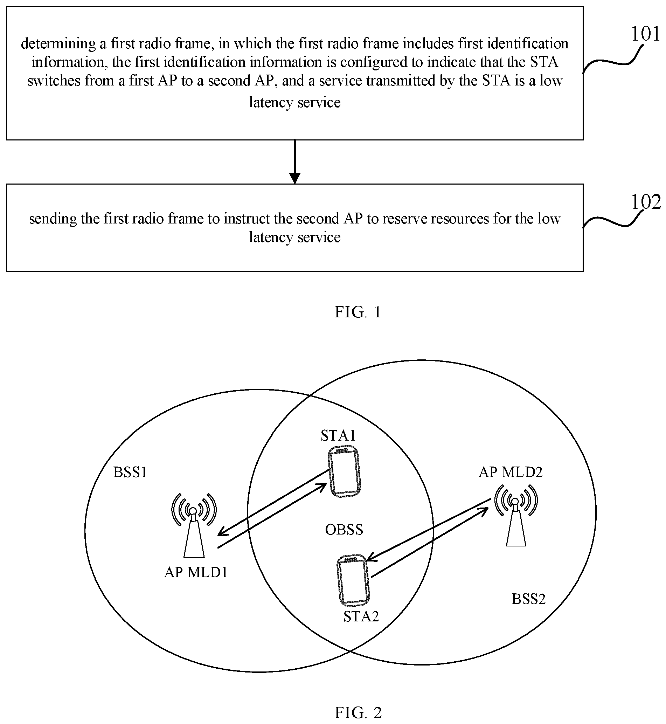

As illustrated in FIG. 1, the embodiment of the disclosure provides a communication method. Optionally, the method is applied to an STA (station). In the embodiment of the disclosure, the STA may be an electronic device having a wireless network access function that provides a frame delivery service to transfer information. The access point (AP) may be a device having a wireless to wired bridging function, and is responsible for extending services provided by a wired network to a wireless network.

The method includes the following steps.

At step 101, a first radio frame is determined, in which the first radio frame includes first identification information, the first identification information is configured to indicate that the STA switches from a first AP to a second AP, and a service transmitted by the STA is a low latency service.

In a WLAN (wireless local area network), a basic service set (BSS) may be composed of APs and one or more STAs that are in communication with the APs. A BSS can be connected to a distribution system (DS) through its AP, and then connected to another BSS to form an extended service set (ESS). As a first example, as illustrated in FIG. 2, an AP1 and an STA1 constitute a BSS1, and an AP2 and an STA2 constitute a BSS2. An overlapping BSS (OBSS) is formed when coverage areas of two or more BSSs are overlapped. As illustrated in FIG. 2, when a BSS1 and a BSS2 are overlapped, an OBSS is formed.

Optionally, in the embodiment of the disclosure, the AP and the STA may be multi-link devices (MLDs), which are represented as AP MLD and non-AP MLD, respectively. The AP MLD represents an AP that supports multi-link communication functions, and the non-AP MLD represents an STA that supports multi-link communication functions.

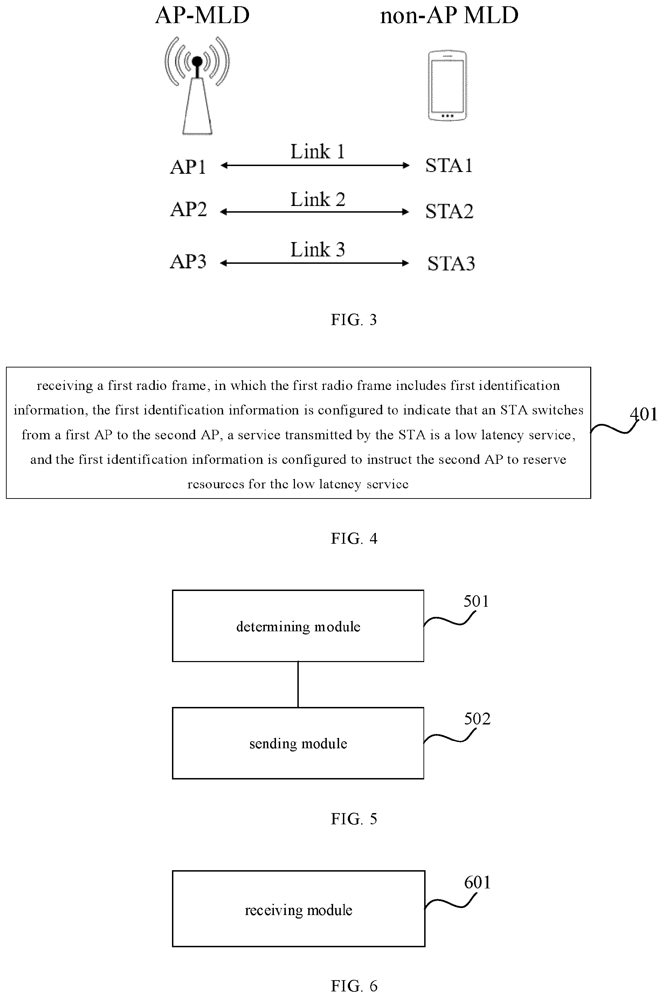

As illustrated in FIG. 3, the AP MLD includes three affiliated APs, i.e., an AP1, an AP2 and an AP3, and each AP can work on a Link 1, a Link 2 and a Link 3, respectively. The non-AP MLD includes three affiliated STAs, i.e., an STA1, an STA2 and an STA3 as illustrated in FIG. 2. The STA1 works in the Link 1, the STA2 works in the Link 2 and the STA3 works in the Link 3.

For ease of description, the following mainly describes an example in which an AP communicates with an STA on multiple links, and the example embodiments of the disclosure are not limited thereto. In the example of FIG. 3, the AP1 communicates with the STA1 via the Link 1. Similarly, the AP2 communicates with the STA2 via the Link 2, and the AP communicates with the STA3 via the Link 3. The Link 1, the Link 2 and the Link 3 are links at different frequencies, for example, links at 2.4GHz, 5GHz and6 GHz, or links having the same or different bandwidths at 2.4GHz. In addition, each link may contain a plurality of channels. It is understood that the communication scenario shown in FIG. 2 is only exemplary, and the concept of the disclosure is not limited thereto. For example, the AP MLD may be connected to multiple (three) non-AP MLDs, or the AP may communicate with other types of STAs under each link.

In UHR, a transmission mechanism of low latency services will be further enhanced. When the STA is transmitting a low latency service, there may be a scene in which the STA switches between APs. It is understood that in the embodiment of the disclosure, the AP may be an AP MLD, and for the convenience of explanation, the embodiments of the disclosure will be introduced below by taking the AP as an example, which does not constitute a limitation to the embodiments of the disclosure.

In a scenario where an STA switches between APs, for example, a position of the STA changes, when the STA communicates with the AP1 for a low latency service or communicates for the low latency service (for example, a tunneled direct link setup (TDLS) resource) through the management of AP1, it needs to switch to the AP2 to continue the transmission of low latency service. In order to meet latency requirements of the low latency service, the STA determines the first radio frame. Optionally, the first radio frame includes an authentication confirm frame. The first radio frame carries the first identification information which indicates that the STA switches from the AP1 (i.e., current AP) to the AP2 (i.e., target AP). The service transmitted by the STA is a low latency service. When the AP2 receives the first radio frame, it can reserve resources (network resources or transmission resources, such as link or bandwidth (BW) allocated for the low latency service) for the low latency service according to the first identification information, so that the STA can quickly switch to the AP2, which meets transmission latency requirements and rate requirements of the low latency service.

At step 102, the first radio frame is sent to instruct the second AP to reserve resources for the low latency service.

The STA sends the first radio frame to the second AP, so that the second AP reserves resources for the low latency service transmitted by the STA after receiving the first radio frame, which ensures that the low latency service can continue to be transmitted in a timely manner after the STA switches to the second AP, thereby meeting latency requirements of the low latency service. The embodiment of the disclosure provides a mechanism for switching APs to support transmission of low latency services.

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service.

The first identification information is carried in a first QoS characteristic information element. The QoS characteristic information element includes a set of parameters, which define characteristics of uplink and downlink traffic at the STA. A second example is illustrated in Table 1 below.

**Table 1**

| Information content | Element ID | Length | Element ID Extension | Control Info | Minimum Service Interval | Maximum Service Interval | Minimum Data Rate | Delay Bound |
|---|---|---|---|---|---|---|---|---|
| Octets | 1 | 1 | 1 | 4 | 4 | 4 | 3 | 3 |

| Information content | Maximum MSDU Size | Service Start Time | Mean Data Rate | Burst Size | MSDU Lifetime | MSDU Delivery Ratio | MSDU Count Exponent | Medium Time |
|---|---|---|---|---|---|---|---|---|
| Octets | 0 or 2 | 0 or 4 | 0 or 3 | 0 or 4 | 0 or 2 | 0 or 1 | 0 or 1 | 0 or 1 |

The first identification information includes at least one of the following items (1) to (3):
(1) a first identification bit(s), which is carried in a control information field (Control Info field) of a first QoS characteristic information element. That is, the Control Info field of the QoS characteristic information element carries the first identification bit(s). As a third example, the format of the Control Info field is shown in Table 2.

**Table 2**

| Content | Direction | TID | User Priority | Presence Bitmap Of Additional Parameters | Link ID | Reserved |
|---|---|---|---|---|---|---|
| Bits | 2 | 4 | 3 | 16 | 4 | 3 |

Optionally, the first identification bit(s) occupies one bit to be identified as a low latency service, for example, occupying one of the reserved bits;
(2) a second identification bit(s), which is carried in a delay bound field of the first QoS characteristic information element. For example, if a delay bound indicated by a parameter in the delay bound field is no greater than M microseconds (ms), the transmitted service is identified as a low latency service. Optionally, M may be 10 or other values; or
(3) a third identification bit(s), which is carried in a service start time subfield of the control information field of the first QoS characteristic information element. For example, if a service start time indicated by a parameter in the service start time subfield is no greater than N ms, the transmitted service is identified as a low latency service. Optionally, N may be 0 or other values.

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service.

The first radio frame includes second identification information. The second identification information is configured to indicate that the STA applies to the second AP for a reserved TDLS (tunneled direct link setup) resource or a peer-to-peer (P2P) resource, so that the STA can quickly switch to the second AP when needed, thereby meeting transmission latency requirements and rate requirements of the low latency service. For example, the STA is a fast transition originator (FTO) STA.

As illustrated in Table 2, the second identification information is carried in a direction subfield of the control information field of the first QoS characteristic information element.

Optionally, in the embodiment of the disclosure, the first QoS characteristic information element is carried in a resource information container (RIC) request information element.

The first QoS characteristic information element is carried in the RIC information element. As a fourth example, the format of the RIC information element is shown in Table 3.

**Table 3**

| | | |
|---|---|---|
| Resource Request | Resource Request | Resource Request |

The RIC refers to a collection of elements that are used to express a resource request or response. Table 3 shows an example of a resource request, a resource type of the resource request may be QoS, and its resource descriptor definition is shown in Table 4 below.

**Table 4**

| Resource type | Resource Descriptor definition | Notes |
|---|---|---|
| QoS | In a request: TSPEC (see 9.4.2.29 (TSPEC element)), followed by zero or more TCLAS (see 9.4.2.30 (TCLAS element)), followed by zero or one TCLAS Processing elements (see 9.4.2.32 (TCLAS Processing element)), followed by zero or one Expedited Bandwidth Request elements(see 9.4.2.93 (Expedited Bandwidth Request element)).In a response: a TSPEC element (see 9.4.2.29(TSPEC element)), followed by zero or one Schedule elements (see 9.4.2.33 (Schedule element)), followed by zero or more Delay elements (see 9.4.2.31 (TS Delay element)),followed by other optional elements as specified in 11.4 (TS operation).) | May be sent by a QoS STA that is an FTO to aQoS AP. Definition of TSPEC elements shall be as given in 11.4 (TS operation). Definition of TCLAS, TCLAS Processing, Expedited Bandwidth Request, and Schedule elements, and the rules for including them in requests and responses, shall be as given in 11.4 (TS operation). Resource request procedures shall be as given in 11.4 (TS operation).) |

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service.

The first radio frame includes third identification information, and the third identification information is configured to indicate that the STA supports multi-link communication and has complete a multi-link key negotiation with the second AP. For example, FTO STA supports multi-link scenarios.

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service.

The first radio frame includes fourth identification information, the fourth identification information is configured to indicate a link corresponding to the low latency service transmission requested by the STA. For example, in a multi-link scenario, it identifies the specific link under which the low latency service is transmitted, or it identifies a downlink low latency service or an uplink low latency service.

The fourth identification information is carried in a link bitmap field of the first radio frame.

The embodiment of the disclosure provides a communication method. Optionally, the method is applied to an STA, and includes:
determining a first radio frame, in which the first radio frame includes first identification information, the first identification information is configured to indicate the STA to switch from a first AP to a second AP, and a service transmitted by the STA is a low latency service; and
sending the first radio frame to instruct the second AP to reserve resources for the low latency service; and
receiving a second radio frame, and obtaining fifth identification information carried in the second radio frame, in which the fifth identification information is configured to indicate resource information reserved by the second AP for the low latency service.

After receiving the first radio frame, the second AP reserves resources for the low latency service transmitted by the STA according to the first identification information, so as to ensure that the low latency service can continue to be transmitted in a timely manner after the STA switches to the second AP, thereby meeting the latency requirements of the low latency service. In detail, the second AP carries the fifth identification information in the second radio frame, and the fifth identification information is configured to indicate the resource information of network resources or transmission resources reserved by the second AP for the low latency service, such as a link or a BW allocated for the low latency service.

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service; and
receiving a second radio frame, and obtaining fifth identification information carried in the second radio frame, in which the fifth identification information is configured to indicate resource information reserved by the second AP for the low latency service, the reserved resource information includes a target link allocated for the low latency service;
the target link is consistent with a link to which the STA applies.

In the first radio frame, the STA identifies link information of a link to which it applies for transmission of the low latency service, and then the second AP allocates a target link for the STA. If the second AP is an AP MLD, the AP MLD can satisfy the link information according to a load under each link, and the link information allocated to the STA is consistent with the link information of the link to which the STA applies.

The embodiment of the disclosure provides a communication method. Optionally, the method is applied to an STA, and includes:
determining a first radio frame, in which the first radio frame includes first identification information, the first identification information is configured to indicate that the STA switches from a first AP to a second AP, and a service transmitted by the STA is a low latency service; and
sending the first radio frame to instruct the second AP to reserve resources for the low latency service;
receiving a second radio frame, and obtaining fifth identification information carried in the second radio frame, in which the fifth identification information is configured to indicate resource information reserved by the second AP for the low latency service, the reserved resource information includes a target link allocated for the low latency service;
the target link is different from a link to which the STA applies.

If the second AP is an AP MLD, the AP MLD may allocate link information different from the link information in the STA to the STA according to the load under each link. Or, in the first radio frame, the STA does not identify the link information, and the AP MLD can allocate a link to the STA according to the load of each link for transmission of the low latency service.

Optionally, in the embodiment of the disclosure, the first radio frame includes an authentication confirm frame, and
the second radio frame includes an authentication acknowledge (ACK) frame.

The embodiment of the disclosure provides a communication method. Optionally, the method is applied to an STA, and includes:
determining a first radio frame, in which the first radio frame includes first identification information, the first identification information is configured to indicate the STA to switch from a first AP to a second AP, and a service transmitted by the STA is a low latency service; and
sending the first radio frame to instruct the second AP to reserve resources for the low latency service; and
receiving a second radio frame, and obtaining fifth identification information carried in the second radio frame, in which the fifth identification information is configured to indicate resource information reserved by the second AP for the low latency service, the fifth identification information is carried in a second QOS characteristic information element of the second radio frame, and the second QOS characteristic information element is carried in a RIC response information element. The format of the second QOS characteristic information element refers to the aforementioned Table 1 and Table 2, and the format of the RIC response information element refers to the aforementioned Table 3 and Table 4, which are not repeated here.

In the embodiment of the disclosure, the STA determines the first radio frame, which includes the first identification information. The first identification information is configured to indicate the STA to switch from a first AP to a second AP, and a service transmitted by the STA is a low latency service. The STA sends the first radio frame to the second AP to cause the second AP to reserve resources for the low latency service transmitted by the STA after receiving the first radio frame, which ensures that the low latency service can continue to be transmitted in a timely manner after the STA switches to the second AP, thereby meeting latency requirements of the low latency service. The embodiment of the disclosure provides a mechanism for switching APs to support transmission of low latency services.

As illustrated in FIG. 4, an embodiment of the disclosure provides a communication method. Optionally, the method is applied to a network device, which is a second AP. The method includes the following steps.

At step 401, a first radio frame is received.

The first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The architecture of WLAN to which the communication method provided by the embodiment of the disclosure is applied refers to the aforementioned first example, which will not be repeated here.

In UHR, a transmission mechanism of low latency services will be further enhanced. When the STA transmits low latency services, it may switch between APs. It is understood that in the embodiment of the disclosure, the AP may be an AP MLD, and for the convenience of explanation, the embodiment of the disclosure will be introduced later with an AP as an example, but this does not constitute a limitation to the embodiment of the disclosure.

In a scenario where an STA switches between APs, for example, a position of the STA changes, when the STA communicates with the AP1 for a low latency service or communicates for the low latency service (for example, a tunneled direct link setup (TDLS) resource) through the management of AP1, it needs to switch to the AP2 to continue the transmission of low latency service. In order to meet latency requirements of the low latency service, the STA determines the first radio frame. Optionally, the first radio frame includes an authentication confirm frame. The first radio frame carries the first identification information, the first identification information indicates that the STA switches from the AP1 (i.e., current AP) to the AP2 (i.e., target AP). The service transmitted by the STA is a low latency service. When the AP2 receives the first radio frame, it can reserve resources (network resources or transmission resources) for the low latency service according to the first identification information, such as a link or a BW allocated for the low latency service, so that the STA can quickly switch to the AP2, which meets transmission latency requirements and rate requirements of the low latency service.

After receiving the first radio frame, the second AP reserves resources for the low latency service transmitted by the STA, to ensure that the low latency service can continue to be transmitted quickly after the STA switches to the second AP, which meets the latency requirements of the low latency service. The embodiment of the disclosure provides a mechanism for performing AP switching when supporting transmission of low latency services.

The embodiment of the disclosure provides a communication method. Optionally, the method is applied to a network device, which is a second AP. The method includes:
receiving a first radio frame;
the first radio frame includes first identification information, the first identification information is configured to indicate that an STA the first identification information to switch from a first AP to the second AP, a service transmitted by the STA is a low latency service, and the first identification information is configured to instruct the second AP to reserve resources for the low latency service.

The first identification information is carried in a first QoS characteristic information element. The QoS characteristic information element includes a set of parameters, which define characteristics of uplink and downlink traffic at the STA. The format of the first QOS characteristic information element can refer to the aforementioned Table 1, which will not be repeated here.

The first identification information is carried in a first QoS characteristic information element. The first identification information includes at least one of:
(1) a first identification bit(s), which is carried in a control information field (Control Info field) of a first QoS characteristic information element. That is, the Control Info field of the QoS characteristic information element carries the first identification bit(s). The format of the Control Info field is shown in Table 2, which will not be repeated here. The first identification bit(s) occupies one bit to be identified as a low latency service, for example, occupying one of the reserved bits;
(2) a second identification bit(s), which is carried in a delay bound field of the first QoS characteristic information element. For example, if a delay bound indicated by a parameter in the delay bound field is no greater than M ms, the transmitted service is identified as a low latency service. Optionally, M may be 10 or other values; or
(3) a third identification bit(s), which is carried in a service start time subfield of the control information field of the first QoS characteristic information element. For example, if a service start time indicated by a parameter in the service start time subfield is no greater than N ms, the transmitted service is identified as a low latency service. Optionally, N may be 0 or other values.

The embodiment of the disclosure provides a communication method. Optionally, the method is applied to a network device, which is a second AP. The method includes:
receiving a first radio frame;
the first radio frame includes first identification information, the first identification information is configured to indicate that an STA the first identification information to switch from a first AP to the second AP, a service transmitted by the STA is a low latency service, and the first identification information is configured to instruct the second AP to reserve resources for the low latency service.

The first radio frame includes second identification information. The second identification information is configured to indicate that the STA applies to the second AP for a reserved TDLS resource or a P2P resource, so that the STA can quickly switch to the second AP when needed, thereby meeting transmission latency requirements and rate requirements of the low latency service. For example, the STA is an FTO STA.

With reference to Table 2, the second identification information is carried in a direction subfield of the control information field of the first QoS characteristic information element.

Optionally, in the embodiment of the disclosure, the first QoS characteristic information element is carried in a RIC request information element. The RIC refers to a collection of elements that are used to express a resource request or response. The format of the RIC information element is as shown in Table 3 above, and will not be described here.

The embodiment of the disclosure provides a communication method. Optionally, the method is applied to a network device, which is a second AP. The method includes:
receiving a first radio frame;
the first radio frame includes first identification information, the first identification information is configured to indicate that an STA the first identification information to switch from a first AP to the second AP, a service transmitted by the STA is a low latency service, and the first identification information is configured to instruct the second AP to reserve resources for the low latency service.

The first radio frame includes third identification information, and the third identification information is configured to indicate that the STA supports multi-link communication and has complete a multi-link key negotiation with the second AP. For example, the FTO STA supports multi-link scenarios.

The embodiment of the disclosure provides a communication method. Optionally, the method is applied to a network device, which is a second AP. The method includes:
receiving a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The first radio frame includes fourth identification information, the fourth identification information is configured to indicate a link corresponding to the low latency service transmission requested by the STA. For example, in a multi-link scenario, it identifies the specific link under which the low latency service is transmitted, or it identifies a downlink low latency service or an uplink low latency service.

The fourth identification information is carried in a link bitmap field of the first radio frame.

The embodiment of the disclosure provides a communication method. Optionally, the method is applied to a network device, which is a second AP. The method includes:
receiving a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service; and
sending a second radio frame, in which the second radio frame carries fifth identification information, and the fifth identification information is configured to indicate resource information reserved by the second AP for the low latency service.

After receiving the first radio frame, the second AP reserves resources for the low latency service transmitted by the STA according to the first identification information, so as to ensure that the low latency service can continue to be transmitted in a timely manner after the STA switches to the second AP, thereby meeting the latency requirements of the low latency service. In detail, the second AP carries the fifth identification information in the second radio frame, and the fifth identification information is configured to indicate the resource information of network resources or transmission resources reserved by the second AP for the low latency service, such as a link or a BW allocated for the low latency service.

The embodiment of the disclosure provides a communication method. Optionally, the method is applied to a network device, which is a second AP. The method includes:
receiving a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The reserved resource information includes a target link allocated for the low latency service, and the target link is consistent with the link to which the STA applies.

In the first radio frame, the STA identifies the link information of the low latency service transmission, and the second AP allocates the target link for the STA. If the second AP is an AP MLD, the AP MLD can satisfy the link information applied by the STA according to the load under each link, and the link information allocated to the STA is consistent with the link information applied by the STA.

The embodiment of the disclosure provides a communication method. Optionally, the method is applied to a network device, which is a second AP. The method includes:
receiving a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The reserved resource information includes a target link allocated for the low latency service, and the target link is consistent with the link applied by the STA.

If the second AP is an AP MLD, the AP MLD may allocate link information to the STA according to the load under each link, which may be different from the link information applied by the STA. Or, in the first radio frame, the STA does not identify the link information, and the AP MLD can allocate a link to the STA according to the load of each link to transmit the low latency service.

The embodiment of the disclosure provides a communication method. Optionally, the method is applied to a network device, which is a second AP. The method includes:
receiving a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The fifth identification information is carried in a second QoS characteristic information element of the second radio frame, and the second QoS characteristic information element is carried in a RIC response information element. The format of the second QOS characteristic information element refers to the aforementioned Table 1 and Table 2, and the format of the RIC response information element refers to the aforementioned Table 3 and Table 4, which are not repeated here.

Optionally, in the embodiment of the disclosure, the first radio frame includes an authentication confirm frame, and
the second radio frame includes an authentication ACK frame.

Optionally, in the embodiment of the disclosure, the first QoS characteristic information element is carried in the RIC request information element.

In the embodiment of the disclosure, the second AP receives the first radio frame, which includes the first identification information. The first identification information is configured to indicate that the STA switches from the first AP to the second AP, and the service transmitted by the STA is a low latency service. The STA sends the first radio frame to the second AP to cause the second AP to reserve resources for the low latency service transmitted by the STA after receiving the first radio frame, which ensures that the low latency service can continue to be transmitted in a timely manner after the STA switches to the second AP, thereby meeting latency requirements of the low latency service. The embodiment of the disclosure provides a mechanism for switching APs to support transmission of low latency services.

As illustrated in FIG. 5, based on the same principle as the method provided by the embodiment of the disclosure, the embodiment of the disclosure provides an electronic device. The electronic device is an STA, and includes:
a determining module 501, configured to determine a first radio frame, in which the first radio frame includes first identification information, the first identification information is configured to indicate that the STA switches from a first AP to a second AP, and a service transmitted by the STA is a low latency service; and
a sending module 502, configured to send the first radio frame to instruct the second access point to reserve resources for the low latency service.

In an optional embodiment, the first identification information is carried in a first QoS characteristic information element, and
the first identification information includes at least one of:
a first identification bit(s) carried in a control information field of a first QoS characteristic information element;
a second identification bit(s) carried in a delay bound field of the first QoS characteristic information element; or
a third identification bit(s) carried in a service start time subfield of the control information field of the first QoS characteristic information element.

In an optional embodiment, the first radio frame includes second identification information, and the second identification information is configured to indicate that the STA applies to the second AP for a reserved TDLS resource or a P2P resource, and
the second identification information is carried in a direction subfield of a control information field of a first QoS characteristic information element.

In an optional embodiment, the first radio frame includes third identification information, and the third identification information is configured to indicate that the STA supports multi-link communication and has complete a multi-link key negotiation with the second AP.

In an optional embodiment, the first radio frame includes fourth identification information, the fourth identification information is configured to indicate a link corresponding to the low latency service transmission requested by the STA, and
the fourth identification information is carried in a link bitmap field of the first radio frame.

In an optional embodiment, the electronic device further includes:
a second receiving module, configured to receive a second radio frame, and obtain fifth identification information carried in the second radio frame, in which the fifth identification information is configured to indicate resource information reserved by the second AP for the low latency service.

In an optional embodiment, the reserved resource information includes a target link allocated for the low latency service.

In an optional embodiment, the fifth identification information is carried in a second QoS characteristic information element of the second radio frame, and the second QoS characteristic information element is carried in a RIC response information element.

In an optional embodiment, the first radio frame includes an authentication confirm frame; and
the second radio frame includes an authentication ACK frame.

In an optional embodiment, the first QoS characteristic information element is carried in a RIC request information element.

The embodiment of the disclosure also provides a communication device, which is configured in an STA. The device includes:
a radio frame determining module, configured to determine a first radio frame, in which the first radio frame includes first identification information, the first identification information is configured to indicate that the STA switches from a first AP to a second AP, and a service transmitted by the STA is a low latency service; and
a radio frame sending module, configured to send the first radio frame to instruct the second AP to reserve resources for the low latency service.

The device also includes other modules of the electronic device in the aforementioned embodiment, which will not be described in detail here.

As illustrated in FIG. 6, based on the same principle as the method provided by the embodiment of the disclosure, the embodiment of the disclosure provides an electronic device. The electronic device is a second AP, and includes:
a receiving module 601, configured to receive a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

In an optional embodiment, the first identification information is carried in a first QoS characteristic information element; and
the first identification information includes at least one of:
a first identification bit(s) carried in a control information field of a first QoS characteristic information element;
a second identification bit(s) carried in a delay bound field of the first QoS characteristic information element; or
a third identification bit(s) carried in a service start time subfield of the control information field of the first QoS characteristic information element.

In an optional embodiment, the first radio frame includes second identification information, and the second identification information is configured to indicate that the STA applies to the second AP for a reserved TDLS resource or a P2P resource; and
the second identification information is carried in a direction subfield of a control information field of a first QoS characteristic information element.

In an optional embodiment, the first radio frame includes third identification information, and the third identification information is configured to indicate that the STA supports multi-link communication and has complete a multi-link key negotiation with the second AP.

In an optional embodiment, the first radio frame includes fourth identification information, and the fourth identification information is configured to indicate a link corresponding to the low latency service transmission requested by the STA; and
the fourth identification information is carried in a link bitmap field of the first radio frame.

In an optional embodiment, the electronic device further includes:
a second sending module, configured to send a second radio frame, in which the second radio frame carries fifth identification information, and the fifth identification information is configured to indicate resource information reserved by the second AP for the low latency service.

In an optional embodiment, the reserved resource information includes a target link allocated for the low latency service.

In an optional embodiment, the fifth identification information is carried in a second QoS characteristic information element of the second radio frame, and the second QoS characteristic information element is carried in a RIC response information element.

In an optional embodiment, the first radio frame includes an authentication confirm frame; and
the second radio frame includes an authentication ACK frame.

In an optional embodiment, the first QoS characteristic information element is carried in a RIC request information element.

The embodiment of the disclosure also provides a communication device, which is configured in a second AP. The device includes:
a radio frame receiving module, configured to receive a first radio frame;
the first radio frame includes first identification information, the first identification information is configured to indicate that an STA switches from a first AP to the second AP, a service transmitted by the STA is a low latency service, and the first identification information is configured to instruct the second AP to reserve resources for the low latency service.

The device also includes other modules of the electronic device in the aforementioned embodiment, which will not be described in detail here.

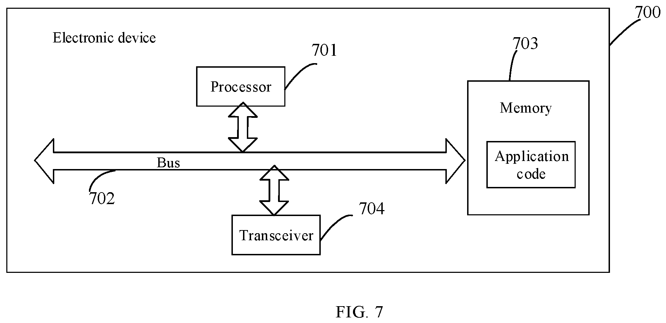

In an optional embodiment, the embodiment of the disclosure also provides an electronic device. As illustrated in FIG. 7, the electronic device 700 shown in FIG. 7 may be a server, which includes: a processor 701 and a memory 703. The processor 701 is connected to the memory 703, for example, via a bus 702. Optionally, the electronic device 700 may also include a transceiver 704. It should be noted that there may be one or more transceivers 704 in practical applications, and the structure of the electronic device 700 does not constitute a limitation on the embodiments of the disclosure.

The processor 701 may be a central processing unit (CPU), a general purpose processor, a digital signal processor (DSP), an application specific integrated circuit (ASIC), a field programmable gate array (FPGA) or other programmable logic devices, transistor logic devices, hardware components, or any combination thereof. The processor 701 may implement or execute various exemplary logic boxes, modules, and circuits described in combination with the contents disclosed in the disclosure. The processor 701 may also be a combination that implements a computing function, for example, a combination consisting of one or more microprocessors, or a combination consisting of DSPs and microprocessors.

The bus 702 may include a pathway to transfer information among the above components. The bus 702 may be a peripheral component interconnect (PCI) bus or an extended industry standard architecture (EISA) bus. The bus 702 may be categorized as an address bus, a data bus, a control bus, and the like. For ease of representation, the bus 702 is represented by only one thick line in FIG. 7, but it does not indicate that there is only one bus or one type of bus.

The memory 703 may be a read only memory (ROM) or other types of static storage devices for storing static information and instructions, a random access memory (RAM) or other types of dynamic storage devices for storing information and instructions, an electrically erasable programmable ROM (EEPROM), a Compact Disc-ROM (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

The memory 703 is configured to store application codes for executing the solution of the disclosure, and the execution is controlled by the processor 701. The processor 701 is configured to execute the application codes stored in the memory 703 to implement the contents shown in the foregoing method embodiments.

The electronic device includes but is not limited to: a mobile phone, a notebook computer, a digital broadcast receiver, a personal digital assistant (PDA), a Pad, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 7 is only an example and should not impose any limitation on the functions and scope of use of the embodiments of the disclosure.

The server provided by the disclosure may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, content distribution network (CDN), and big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited herein.

The embodiments of the disclosure provide a computer readable storage medium. The computer readable storage medium stores a computer program, and when the computer program is executed by a computer, the computer is caused to implement the corresponding contents in the above method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of execution is not necessarily sequential, but may be executed in turn or alternately with other steps or at least a portion of sub -steps or stages of other steps.

It is noted that the computer readable medium described above in the disclosure may be a computer readable signal medium, a computer-readable storage medium or any combination thereof. The computer readable storage medium may include, but is not limited to, an electrical, magnetic, optical, electromagnetic, infrared, or semiconducting system, apparatus or device, or any combination thereof. More specific examples of the computer readable storage medium may include, but are not limited to, electrical connections having one or more wires, portable computer disks, hard disks, RAMs, ROMs, erasable programmable ROMs (EPROMs or flash memories), optical fibers, portable CD-ROMs, optical storage devices, magnetic memory devices, or any suitable combination thereof. In the disclosure, the computer readable storage medium may be any tangible medium containing or storing programs that can be used by or in combination with an instruction execution system, apparatus or device. In the disclosure, the computer readable signal medium may include a data signal propagated in a baseband or as part of a carrier that carries computer readable program codes. The propagated data signal may take a variety of forms, which includes, but is not limited to, an electromagnetic signal, an optical signal, or any suitable combination thereof. The computer readable signal medium may also be any computer readable medium other than the computer readable storage medium. The computer readable signal medium may send, propagate, or transmit a program that can be used by or in combination with an instruction execution system, apparatus, or device. The program code stored on the computer readable medium may be transmitted using any suitable medium, which includes, but is not limited to: wire, fiber optic cable, radio frequency (RF), or any suitable combination thereof.

The above computer readable medium may be contained in the above electronic device or exist independently rather than being assembled into the electronic device.

The computer readable medium carries one or more programs. When the one or more programs are executed by the electronic device, the electronic device is caused to implement the method shown in the above embodiments.

According to an aspect of the disclosure, a computer program product or computer program is provided. The computer program product or computer program includes computer instructions stored in a computer readable storage medium. The processor of the computer device reads the computer instructions from the computer readable storage medium, and the processor executes the computer instructions to cause the computer device to implement the communication method provided in the above optional implementations.

The computer program codes for performing the operations of the disclosure may be written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a local area network (LAN) or a wide area network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in a reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The name of a module does not constitute a limitation of the module itself in a certain case. For example, module A may also be described as "module A for performing an operation B".

The above description is only preferred embodiments of the disclosure and an explanation of the technical principles utilized. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the disclosure.

## Claims

1. A communication method, applied to a station (STA), comprising:
determining a first radio frame, wherein the first radio frame comprises first identification information, the first identification information is configured to indicate that the STA switches from a first access point (AP) to a second AP, and a service transmitted by the STA is a low latency service; and
sending the first radio frame to instruct the second AP to reserve resources for the low latency service.

2. The method of claim 1, wherein the first identification information is carried in a first quality of service (QoS) characteristic information element; and
the first identification information comprises at least one of:
a first identification bit(s) carried in a control information field of a first QoS characteristic information element;
a second identification bit(s) carried in a delay bound field of the first QoS characteristic information element; or
a third identification bit(s) carried in a service start time subfield of the control information field of the first QoS characteristic information element.

3. The method of claim 1, wherein the first radio frame comprises second identification information, and the second identification information is configured to indicate that the STA applies to the second AP for a reserved tunneled direct link setup (TDLS) resource or a peer-to-peer (P2P) resource; and
the second identification information is carried in a direction subfield of a control information field of a first QoS characteristic information element.

4. The method of claim 1, wherein the first radio frame comprises third identification information, and the third identification information is configured to indicate that the STA supports multi-link communication and has complete a multi-link key negotiation with the second AP.

5. The method of claim 1, wherein the first radio frame comprises fourth identification information, the fourth identification information is configured to indicate a link corresponding to the low latency service transmission requested by the STA, and the fourth identification information is carried in a link bitmap field of the first radio frame.

6. The method of claim 1, wherein after sending the first radio frame, the method further comprises:
receiving a second radio frame, and obtaining fifth identification information carried in the second radio frame, wherein the fifth identification information is configured to indicate resource information reserved by the second AP for the low latency service.

7. The method of claim 6, wherein the reserved resource information comprises a target link allocated for the low latency service.

8. The method of claim 6, wherein the fifth identification information is carried in a second QoS characteristic information element of the second radio frame, and the second QoS characteristic information element is carried in a resource information container (RIC) response information element.

9. The method of claim 6, wherein the first radio frame comprises an authentication confirm frame; and
the second radio frame comprises an authentication acknowledge (ACK) frame.

10. The method of claim 2 or 3, wherein the first QoS characteristic information element is carried in a RIC request information element.

11. A communication method, applied to a second AP, comprising:
receiving a first radio frame;
wherein the first radio frame comprises first identification information, the first identification information is configured to indicate that an STA switches from a first AP to the second AP, a service transmitted by the STA is a low latency service, and the first identification information is configured to instruct the second AP to reserve resources for the low latency service.

12. The method of claim 11, wherein the first identification information is carried in a first quality of service (QoS) characteristic information element; and
the first identification information comprises at least one of:
a first identification bit(s) carried in a control information field of a first QoS characteristic information element;
a second identification bit(s) carried in a delay bound field of the first QoS characteristic information element; or
a third identification bit(s) carried in a service start time subfield of the control information field of the first QoS characteristic information element.

13. The method of claim 11, wherein the first radio frame comprises second identification information, and the second identification information is configured to indicate that the STA applies to the second AP for a reserved tunneled direct link setup (TDLS) resource or a peer-to-peer (P2P) resource; and
the second identification information is carried in a direction subfield of a control information field of a first QoS characteristic information element.

14. The method of claim 11, wherein the first radio frame comprises third identification information, and the third identification information is configured to indicate that the STA supports multi-link communication and has complete a multi-link key negotiation with the second AP.

15. The method of claim 11, wherein the first radio frame comprises fourth identification information, and the fourth identification information is configured to indicate a link corresponding to the low latency service transmission requested by the STA; and
the fourth identification information is carried in a link bitmap field of the first radio frame.

16. The method of claim 11, wherein after receiving the first radio frame, the method further comprises:
sending a second radio frame, wherein the second radio frame carries fifth identification information, and the fifth identification information is configured to indicate resource information reserved by the second AP for the low latency service.

17. The method of claim 16, wherein the reserved resource information comprises a target link allocated for the low latency service.

18. The method of claim 16, wherein the fifth identification information is carried in a second QoS characteristic information element of the second radio frame, and the second QoS characteristic information element is carried in a resource information container (RIC) response information element.

19. The method of claim 16, wherein the first radio frame comprises an authentication confirm frame; and
the second radio frame comprises an authentication acknowledge (ACK) frame.

20. The method of claim 12 or 13, wherein the first QoS characteristic information element is carried in a RIC request information element.

21. An electronic device, wherein the electronic device is an STA and comprises:
a determining module, configured to determine a first radio frame, wherein the first radio frame comprises first identification information, the first identification information is configured to indicate that the STA switches from a first AP to a second AP, and a service transmitted by the STA is a low latency service; and
a sending module, configured to send the first radio frame to instruct the second AP to reserve resources for the low latency service.

22. An electronic device, wherein the electronic device is a second AP, and comprises:
a receiving module, configured to receive a first radio frame;
wherein the first radio frame comprises first identification information, the first identification information is configured to indicate that an STA switches from a first AP to the second AP, a service transmitted by the STA is a low latency service, and the first identification information is configured to instruct the second AP to reserve resources for the low latency service.

23. An electronic device, comprising a memory, a processor, and a computer program stored in the memory and executable by the processor, wherein when the processor executes the program, the method of any one of claims **1-10** or the method of any one of claims 11-20 is implemented.

24. A computer readable storage medium having a computer program stored thereon, wherein when the computer program is executed by a processor, the method of any one of claims **1-10** or the method of any one of claims 11-20 is implemented.
